(19) Europäisches Patentamt / European Patent Office / Office européen des brevets

(11) **EP 2 088 765 A2**

(12) **EUROPEAN PATENT APPLICATION**

(43) Date of publication:
**12.08.2009 Bulletin 2009/33**

(51) Int Cl.:
***H04N 5/202*** *(2006.01)*

(21) Application number: **09150930.7**

(22) Date of filing: **20.01.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (71) Applicant: **Canon Kabushiki Kaisha**<br>**Tokyo 146-8501 (JP)** |
| | (72) Inventor: **Abe, Naoto**<br>**Tokyo 146-8501 (JP)** |
| (30) Priority: **06.02.2008 JP 2008026223**<br>**11.12.2008 JP 2008315327** | (74) Representative: **TBK-Patent**<br>**Bavariaring 4-6**<br>**80336 München (DE)** |

(54) **Image signal processing apparatus and image signal processing method**

(57) An image signal processing apparatus has an inverse γ-conversion unit (4) for receiving γ-converted video signals and subjecting the video signals to processing for canceling γ-conversion characteristics, and a conversion unit (4a) for generating floating point data from fixed point type data which is proportional to luminance as an output from the inverse γ-conversion unit to transfer the floating point data or to subject the floating point data to reference table processing or signal processing, wherein the floating point data has a significand and an exponent, and the radix of the exponent is 4.

FIG. 1

EP 2 088 765 A2

**Description**

BACKGROUND OF THE INVENTION

Field of the Invention

The present invention relates to an image signal processing apparatus and an image signal processing method. More particularly, the present invention relates to an image signal processing apparatus for and an image signal processing method of creating drive data to be supplied a drive circuit of a display panel based on γ-converted video signals.

Description of the Related Art

There are known flat panel displays such as a plasma display apparatus, a liquid crystal display apparatus, an EL display apparatus, an electron beam display apparatus using an electron-emitting device, and the like. In these types of the display apparatuses, an input image signal (for example, TV signal) is subjected to various signal processings so that drive data suitable for the characteristics of the display panels is created. The signal processings applied to an image signal include, for example, inverse γ-conversion, color correction (refer to paragraphs Nos. 0076 to 0085 of Japanese Patent Application Laid-Open (JP-A) No. 2004-347629), irregular luminance correction (JP-A No. 2008-145494, corresponding US Patent Application is US 2008/136846 (A1), correction circuit), voltage drop correction of row wirings (JP-A No. 2003-114639, corresponding US Patent Application is US 2003/011545 (A1), an adjustment data calculation unit), and the like.

To reduce a calculation error and to realize an image displayed in high quality, it is preferable to increase the effective number of digits in a calculation executed for the signal processings. It is needless to say that a data width (number of bits) is increased to increase the effective number of digits. However, a large data width as large as 48 bits (= 3 RGB colors × 16 bits) is necessary to handle data of, for example, 16 bits. The increase of the data width is not desirable because the hardware cost of a signal processing circuit (ASIC and FPGA) is increased thereby. However, a decrease of the data width is disadvantageous because calculation accuracy is lowered and an image is deteriorated.

Note that JP-A No. 2001-85997 discloses an arrangement by which an analog signal is converted to a digital signal having the number of bits (12 bits) which is larger than the number of bits (10 bits) required by an A/D conversion circuit and the digital signal is converted to a signal having 10 bits after it is multiplied by a multiplication coefficient. As the multiplication coefficient, "1" or "4" is selected according to the level of the analog signal.

SUMMARY OF THE INVENTION

The present invention provides a technique capable of reducing the width of data used for signal processing without deteriorating the quality of an image.

The present invention in its first aspect provides an image signal processing apparatus as specified in claims 1 to 5.

The present invention in its second aspect provides an image signal processing method as specified in claim 6.

According to the present invention, a data width used for signal processing can be reduced without deteriorating the quality of a displayed image.

Further features of the present invention will become apparent from the following description of exemplary embodiments with reference to the attached drawings.

BRIEF DESCRIPTION OF THE DRAWINGS

Fig. 1 is a view showing an arrangement example 1 of an image signal processing circuit;
Fig. 2 is a view showing an arrangement example 2 of the image signal processing circuit;
Fig. 3 is a view showing an arrangement example 3 of the image signal processing circuit;
Fig. 4 is a view showing an arrangement example 4 of the image signal processing circuit;
Fig. 5 is a view showing an arrangement example 5 of the image signal processing circuit;
Fig. 6 is a block diagram showing an overall arrangement of an image display;
Fig. 7 is a view showing the data vs. luminance of a display having gradation characteristics in which luminance changes at the same pitch;
Fig. 8 is a graph of the luminance vs. linear conversion bit number of the display of Fig. 7;
Fig. 9 is a view showing an example of the luminance characteristics (data vs. luminance) of a certain display;

Fig. 10 is a graph of the luminance vs. linear conversion bit number of the display of Fig. 9;

Fig. 11 is a graph of the luminance vs. linear conversion bit number of γ-converted video signals having a 10-bit data width;

Fig. 12 is a graph of the luminance vs. linear conversion bit number of γ-converted video signals having a 8-bit data width;

Fig. 13 is a graph of the luminance vs. linear conversion bit number of visual sense characteristics of a person;

Fig. 14 is a view showing a structure of first floating point data;

Fig. 15 is a view schematically showing the numeral values which can be expressed by the first floating point data;

Fig. 16 is a view showing the luminance vs. linear conversion bit number of the first floating point data;

Fig. 17 is a view showing a structure of second floating point data;

Fig. 18 is a view schematically showing the numeral values which can be expressed by the second floating point data;

Fig. 19 is a view showing the luminance vs. linear conversion bit number of the second floating point data;

Fig. 20 is a view showing a structure of floating point data of a comparative example 1;

Fig. 21 is a view schematically showing the numeral values which can be expressed by the floating point data of the comparative example 1;

Fig. 22 is a view showing a structure of floating point data of a comparative example 2;

Fig. 23 is a view schematically showing the numeral values which can be expressed by the floating point data of the comparative example 2;

Fig. 24 is a graph of the luminance vs. linear conversion bit number of the floating point data of the comparative example 2;

Fig. 25 is a view showing a structure of floating point data of a comparative example 3;

Fig. 26 is a view schematically showing the numeral values which can be expressed by the floating point data of the comparative example 3; and

Fig. 27 is a graph of the luminance vs. linear conversion bit number of the floating point data of the comparative example 3.

## DESCRIPTION OF THE EMBODIMENTS

The present invention is applied to an image signal processing circuit built in an image display apparatus. More particularly, the present invention can be applied to an image signal processing circuit which receives γ-converted video signals. The present invention is applied to, for example, an apparatus for executing conversion (inverse γ-conversion) for creating data having a value proportional to luminance by canceling γ-conversion characteristics of an input image signal and further executing an image processing. The image display apparatus includes an electron beam display apparatus, a plasma display apparatus, a liquid crystal display apparatus, and an organic EL display apparatus. In the electron beam display apparatus, cold-cathode devices such as an FE type (Field Emission-type) electron-emitting device, an MIM type (Metal Insulator Metal-type) electron-emitting device, a surface conduction electron-emitting device, and the like can be used as a display device.

First, a linear conversion bit number is defined as an index for evaluating the gradation performance of an image display apparatus, an image signal processing apparatus, and the like. A method of evaluating the gradation performance (resolution of gradation) will be explained referring to a graph of luminance vs. linear conversion bit number. Next, a method of reducing a data width of data proportional to luminance without deteriorating an image will be explained. Finally, embodiments of the present invention will be explained.

(Linear Conversion Bit Number in Display)

A linear conversion bit number in a display will be explained.

The linear conversion bit number is defined as described below. That is, the linear conversion bit number is a value which shows, when the luminance change is displayed on a display having gradation characteristics in which luminance changes at a certain equal pitch, how many bits of gradation of luminance change correspond to a luminance change caused by one gradation change of data, at a certain luminance.

The linear conversion bit number is specifically defined by an expression as shown below.

$$\mathrm{Lbit}_{(L)} = -\log_2 (\Delta L_{(L)} / \mathrm{Lmax}) \ [\mathrm{bit}]$$

where, Lmax shows maximum luminance of a display, $\Delta L_{(L)}$ shows a change of luminance caused by a change of data of one gradation in luminance L by which the display is displayed (difference of luminance corresponding to the change of data of the one gradation), and $Lbit_{(L)}$ shows the linear conversion bit number in the luminance L.

As can be also found from the definition, the linear conversion bit number more increases in a display having a higher gradation performance. When a graph of luminance vs. linear conversion bit number is plotted, the characteristics of a display having a higher gradation performance are plotted in an upper area. Accordingly, the gradation performance of a display can simply evaluated when the graph of luminance vs. linear conversion bit number is observed.

Next, an example of a graph of luminance vs. linear conversion bit number will be shown.

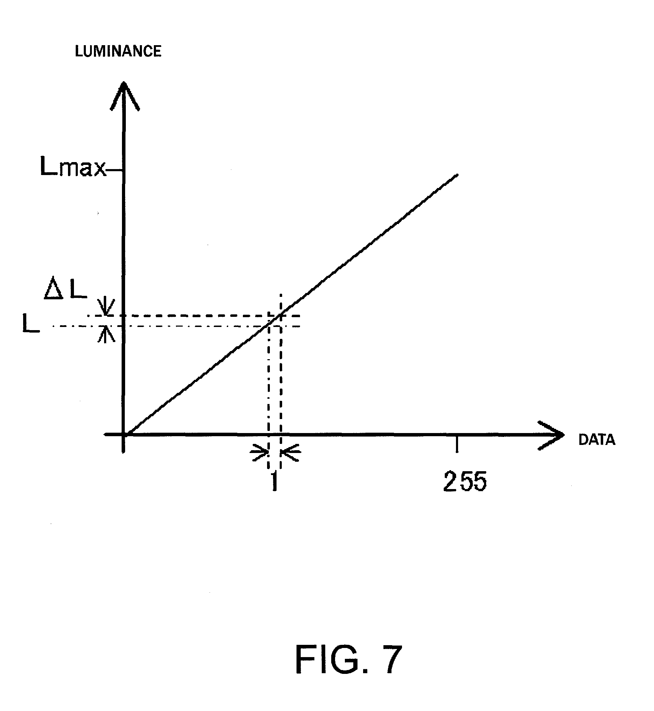

Fig. 7 is a view showing the data vs. luminance in a display having gradation characteristics in which luminance changes at the same pitch. In Fig. 7, lateral axis shows drive data input to a drive circuit of a display, and vertical axis shows luminance of the corresponding display. Fig. 7 shows characteristics of pulse width modulation of 8 bit (divided to 256) as an example. As shown in Fig. 7, luminance increases in proportion to an increase of data.

In the display, the linear conversion bit number $Lbit_{(L)}$ is expressed as follows from the definition described above.

$$\Delta L_{(L)} = Lmax \times (1/256)$$

$$Lbit_{(L)} = -\log_2 (\Delta L_{(L)}/Lmax)$$

$$= -\log_2 (1/256) = 8 \ [bit]$$

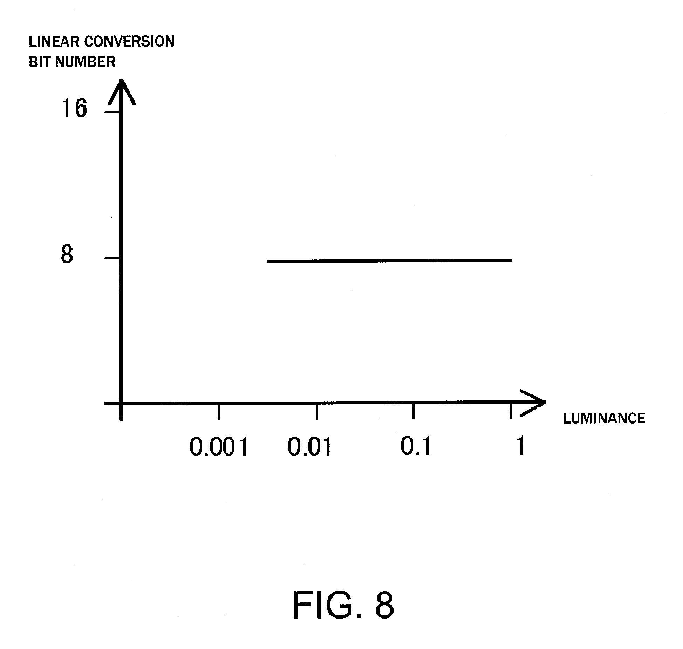

Fig. 8 is a graph of the luminance vs. linear conversion bit number of the display of Fig. 7. In the display having the gradation characteristics in which luminance changes at the same pitch, the linear conversion bit number has a predetermined value (i.e., "8") regardless of luminance.

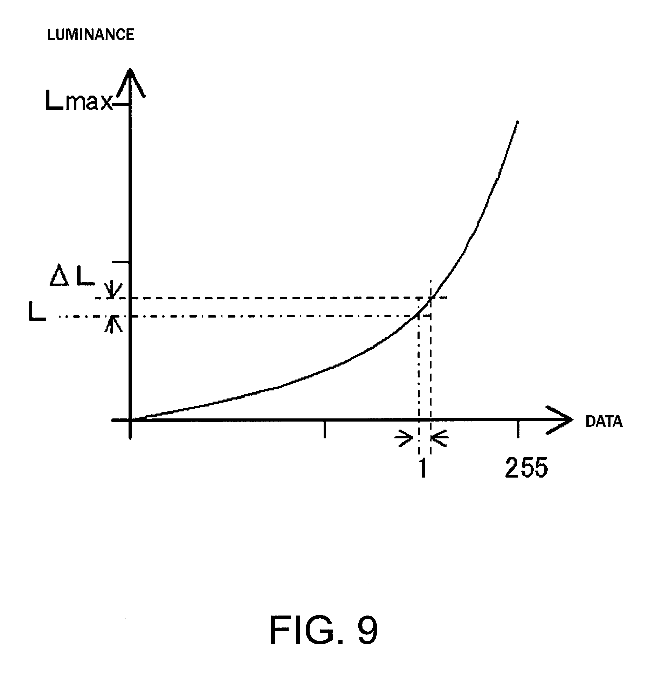

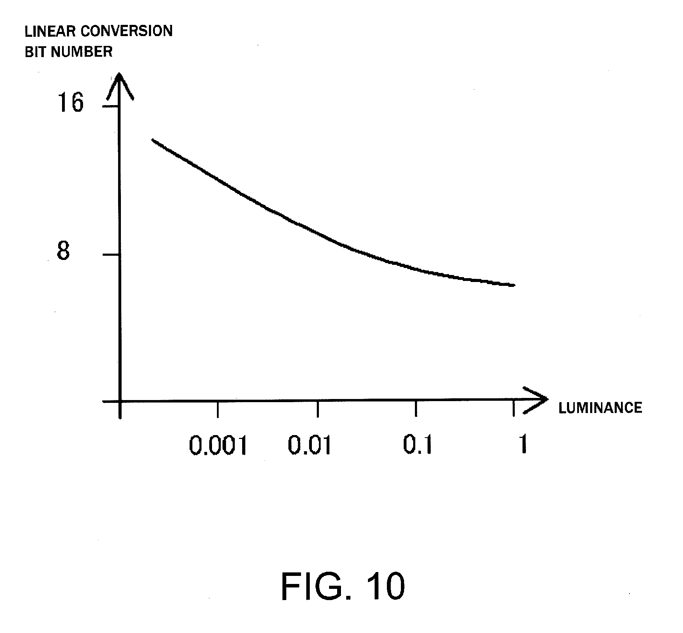

Fig. 9 shows an example of the luminance characteristics (data vs. luminance) of a certain display. Lateral axis shows drive data input to a drive circuit, and vertical axis shows the luminance of the corresponding display. And, Fig. 10 is a graph of the luminance vs. linear conversion bit number of the display of Fig. 9.

As shown in Fig. 9, luminance less changes with respect to increased drive data in a region in which luminance is low (i.e., a gradation performance is high) . It can be found from Fig. 10 that the linear conversion bit number has a large value when luminance is low, and the gradation performance is high in a region in which luminance is low.

Further, when the gradation performances of the displays of Figs. 7 and 9 are compared and evaluated, whether or not the gradation performances are good can be appropriately determined by comparing the graphs of luminance vs. linear conversion bit number (Figs. 8 and 10). That is, a display plotted in an upper area has a higher gradation performance. In this example, it can be clearly found that the gradation performance of the display of Fig. 9 is higher in a low luminance region, and the gradation performance of the display of Fig. 7 is higher in a high luminance region.

(Linear Conversion Bit Number in Signal Processing Apparatus)

To evaluate the gradation performance of a signal processing apparatus, the linear conversion bit number of the signal processing apparatus is defined as shown below based on how the linear conversion bit number is considered in a display as described above.

That is, the linear conversion bit number of the signal processing apparatus is a value which shows, at a luminance corresponding to a certain data, how many bits of gradation correspond to one gradation change of data shown by data proportional to luminance.

This is specifically defined by an expression as shown below.

$$Lbit_{(L)} = -\log_2 (\Delta L_{(L)}/Lmax) \ [bit]$$

where, Lmax shows luminance corresponding to a maximum value of data, $\Delta L_{(L)}$ shows a difference of luminance corresponding to a change of data of one gradation, and $Lbit_{(L)}$ shows a linear conversion bit number in luminance L.

When the data (image signal) processed by the signal processing apparatus is shown on a display, the linear conversion bit number in the signal processing apparatus shows that the gradation of the display luminance has what degree of resolution (gradation performance).

That is, which of signal processing apparatus has higher gradation performance can be determined by comparing the luminance vs. linear conversion bit numbers of different signal processing apparatuses. Further, the gradation performance of the display can be also simply compared and evaluated with that of the signal processing apparatus by comparing with the graph of the luminance vs. linear conversion bit number of the display apparatus.

(Linear Conversion Bit Number in γ-Converted Video Signals)

Next, the linear conversion bit number in video signals obtained by subjecting data proportional to luminance to $\gamma$-Conversion (for example, $\gamma = 0.45$) such as video signals of television will be explained.

The linear conversion bit number is a value which shows that a change of luminance of one gradation in certain luminance corresponds to a change of luminance of how many bits of gradation when the change of the luminance is displayed by data corresponding to luminance.

$\gamma$-converted video signals can be returned to data proportional to luminance (hereinafter, also simply shown as "luminance data") by subjecting the signals to inverse $\gamma$-conversion for canceling the $\gamma$-conversion.

For example, video signals subjected to the $\gamma$ conversion with $\gamma$ set to 0.45 can be returned to luminance data by subjecting to the inverse $\gamma$-conversion with $\gamma$ set to 2.2.

The linear conversion bit number of the $\gamma$-converted video signals is defined as shown below. When a data width is shown by n and the value of data is shown by X at the time the $\gamma$-converted video signals are shown by a binary number, maximum luminance corresponding to a maximum value of the data is proportional to $(2^n-1)^{2.2}$, and luminance L corresponding to a certain data value X is proportional to $X^{2.2}$. The difference of luminance corresponding to a change of data of one gradation of the certain data value X is proportional to $X^{2.2} - (X - 1)^{2.2}$. The linear conversion bit number $Lbit_{(L)}$ of the luminance L corresponding to the certain data value X is defined as shown below.

$$Lbit_{(L)} = -\log_2((X^{2.2} - (X - 1)^{2.2})/(2^n-1)^{2.2})\ [bit]$$

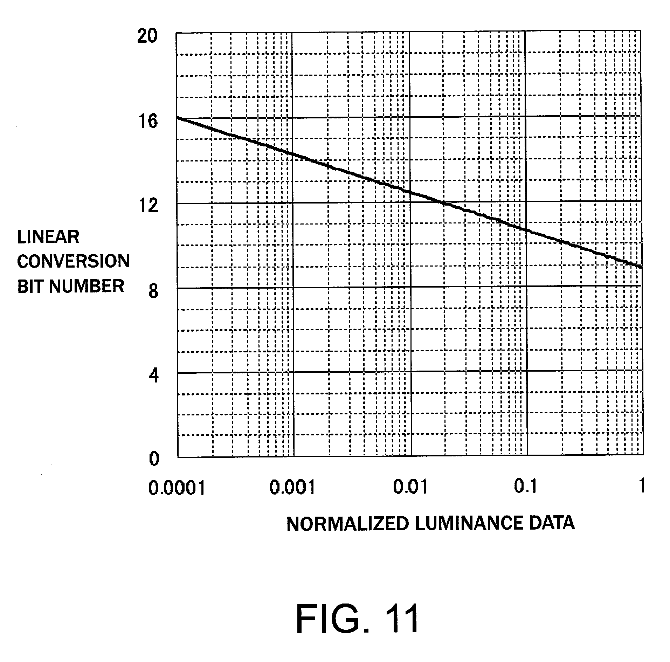

Fig. 11 shows a graph of the luminance vs. linear conversion bit number of $\gamma$-converted video signals shown by a binary number and having a 10-bit data width. Lateral axis shows luminance normalized by maximum luminance, and vertical axis shows a linear conversion bit number.

The area above the line plotted by the graph of the luminance vs. linear conversion bit number shows that the number of gradation is larger than input video signals (i.e., non-existing information). In other words, $\gamma$-converted input video signals can be completely processed and displayed by using a signal processing apparatus and a display having characteristics located above the line plotted by the graph of the luminance vs. linear conversion bit number.

For example, in the video signals of Fig. 11, it can be found that the linear conversion bit numbers of a display and a signal processing apparatus are sufficiently as large as 10 bits in the region of high luminance (normalized luminance > 0.5) and that a gradation performance higher than 14 bits is necessary in low luminance (normalized luminance < 0.001).

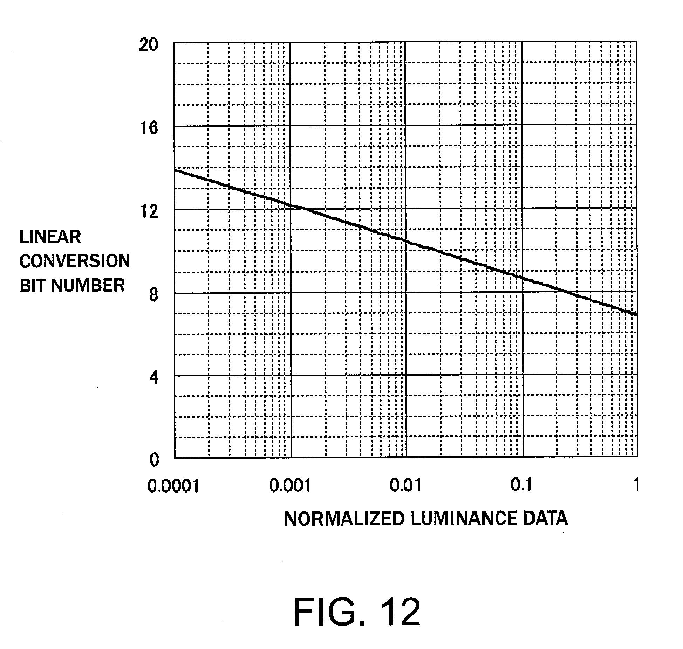

Fig. 12 is a graph of luminance vs. linearly converted bit number of $\gamma$-converted video signals having a 8-bit data width. Lateral axis shows luminance normalized by maximum luminance. It can be found that when input video signals have a small data width, the linear conversion bit number is reduced.

(Linear Conversion Bit Number in Visual Sense Characteristics of Person)

It is assumed that the visual sense characteristics of a person are expressed by a linear conversion bit number regarding the detection limit of the difference of luminance of the person as a gradation step. That is, the visual sense characteristics are defined as shown below.

A display observed by a person is assumed, and maximum luminance is shown by Lmax (dynamic range is determined). The detection limit of a change of luminance, which can be recognized by the person in the luminance L displaying a display, is shown by $\Delta L_{(L)}$. The linear conversion bit number $Lbit_{(L)}$ in the luminance L is defined as shown below.

$$Lbit_{(L)} = -\log_2(\Delta L_{(L)}/Lmax)\ [bit]$$

It is assumed that the linear conversion bit number is called a linear conversion bit number in the visual sense characteristics of the person. With this definition, the detection limit of the difference of luminance of the person can be plotted to the graph of the luminance vs. linear conversion bit number described above.

Since the area above a curve plotted by the graph of the luminance vs. linear conversion bit number shows the difference of luminance finer than the difference of luminance which can be detected by the person, the area is a range which can not be detected by the person. That is, since the person cannot detect the difference of luminance of one gradation in the area above the curve, the person can not detect the difference of characteristics of a signal processing apparatus, a display, and video signals. In other words, even if the signal processing apparatus, the display, and the video signals have any characteristics, it is seemed that the gradation performances thereof are good as long as the person evaluates them. On the contrary, in the graph of the luminance vs. linear conversion bit number in the visual sense characteristics of the person, the person can detect the difference of luminance of the one gradation in the area below the curve. Accordingly, when the gradation characteristics of the signal processing apparatus, the display, and the video signals are located in the area below the curve, it shows that there is a possibility that the deterioration of an image (for example, false contour, irregular gradation), which can be detected by the person may occur.

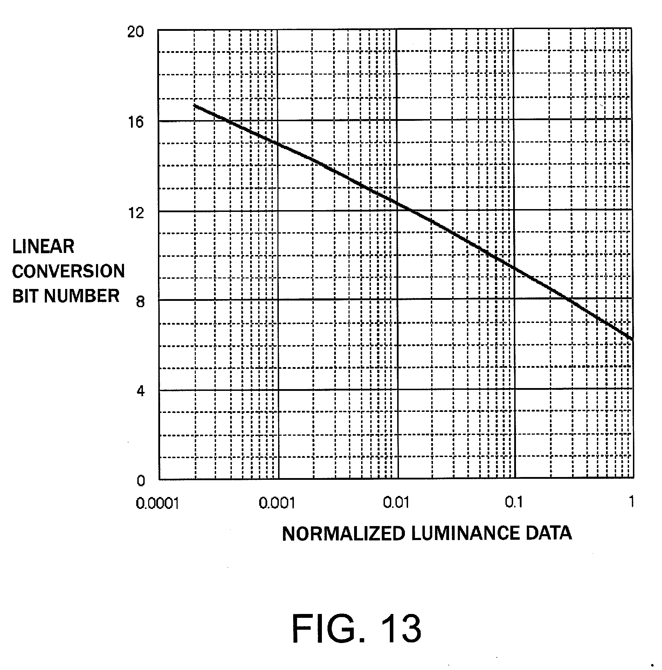

Fig. 13 is a graph of the luminance vs. linearly converted bit number of the visual sense characteristics of the person. Lateral axis shows luminance normalized by maximum luminance. Specifically, in Fig. 13, normalization is executed according to an ordinary display so that 500 cd/m$^2$ corresponds to luminance "1".

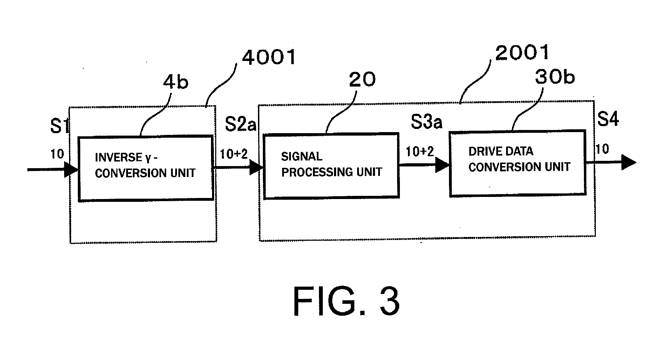

Since the detection limit of the difference of luminance of the person depends also on absolute luminance, the premise of the maximum luminance is necessary. The graph is made using the values read from a document "Color Optics", OHTA Noboru,TokyoDenkiUniversityPress,P.124, Fig. 3 (4.2).

It can be found that the characteristics of a display, a signal processing apparatus, γ-converted video signals, the visual sense characteristics of a person, and the like can be compared and evaluated by same scale by defining the linear conversion bit number as described above.

Next, a method of converting data which is proportional to luminance to data having a small data width without deteriorating it based on a graph of luminance vs. linear conversion bit number (expressing the data using a floating point) will be explained before the embodiments of the present invention are explained. As to the visual sense characteristics of a person, normalization is executed so that 500 cd/m$^2$ corresponds to luminance "1". It is needless to say that a different consideration is necessary to a display from which luminance other than 500 cd/m$^2$ is made.

(First Floating Point Expression Method of Present Invention)

As described above, ordinary data, which has no exponent (although the data is ordinarily integer type data, since it is data having an unchanged decimal point position in a wide meaning, it is also called fixed point data in the specification) requires a lot of bit numbers (data width) to increase an effective number of digits.

Since an expression using a floating point can describe data having a large number of effective digits as compared with an expression using a fixed point.

However, when the expression using the floating point has the same data width as that of the expression using the fixed point, the data width of a fixed point part is reduced. The inventors propose a new system for reducing a data width without deterioration based on the graph of the luminance vs. linear conversion bit number described above when an image signal (image data) is expressed using the floating point.

As a result of repeated examination, the inventors have found that the floating point expression method shown below is effective when an image signal is processed (transferred and subjected to a reference table processing, a signal process, and the like).

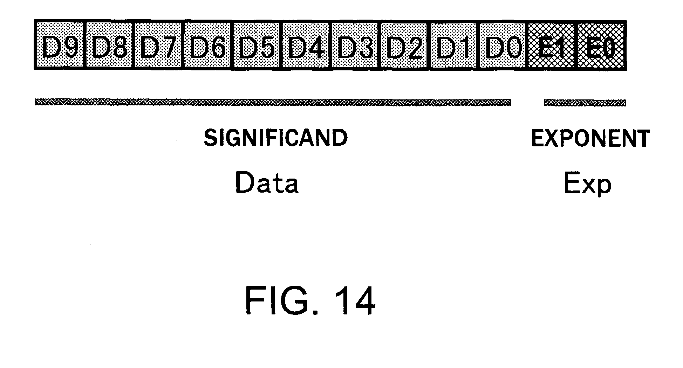

Fig. 14 shows a structure of floating point data in a first floating point expression method. The data structure has a 12-bit data width composed of a 10-bit significand (Data) and a 2-bit exponent (Exp). The data has no sign bit. The floating point data is different from the expression of an ordinary binary floating point in that the radix of the exponent (base) is "4" in place of "2". That is, the exponent shows power of 4. Hereinafter, the data structure is called "first floating point data".

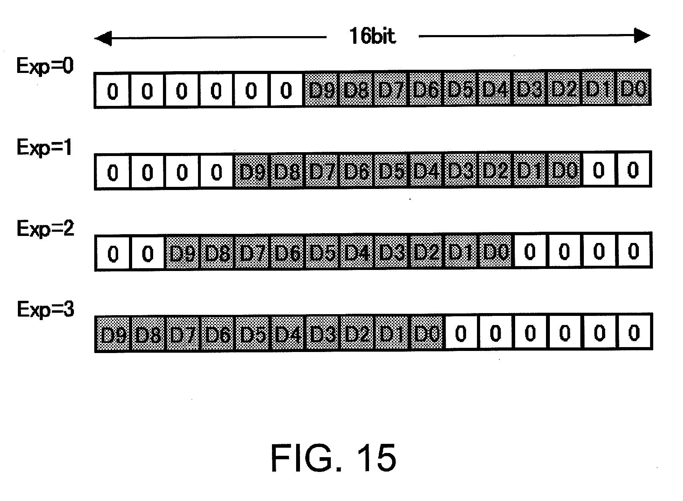

Fig. 15 schematically shows the numerical values that can be expressed by the respective values (0 to 3) of the exponent (Exp). As can be found from Fig. 15, the first floating point data can handle the values in substantially the same range as fixed point data having a 16-bit data width by a 12-bit data width.

The first floating point data will be examined below. However, it is assumed that luminance is normalized such that fixed point data all the 16 bits of which are set to 1 correspond to luminance "1".

When the exponent is "3" as shown in Fig. 15, the upper 10 bits of the 16 bits of the fixed point data is effective. At this time, since the lower 6 bits are "0", a gradation performance (resolution) is deteriorated. Likewise, when the exponent is "1" or "2", since the lower bits are fixed to "0", the gradation performance is also deteriorated.

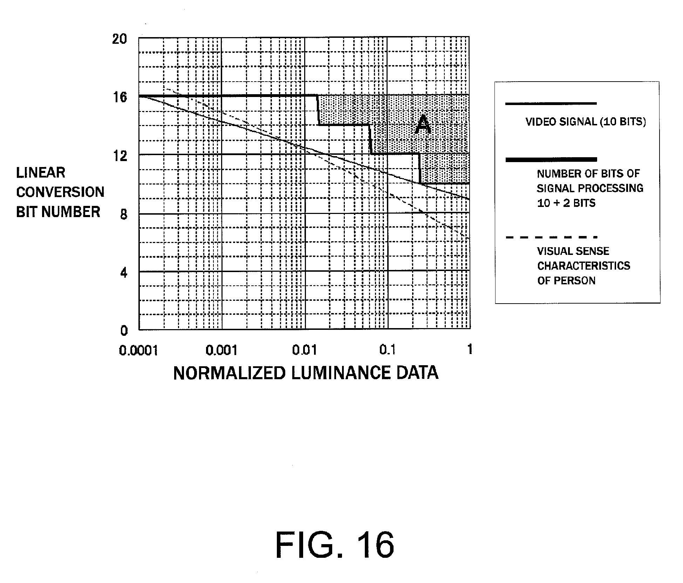

Whether or not the deterioration of the gradation performance can be allowed can be verified using the graph of the luminance vs. linear conversion bit number described above. Fig. 16 shows a linear conversion bit number of the first floating point data. In Fig. 16, the linear conversion bit number of γ-converted (γ = 0.45) video signals having a 10-bit data width and the linear conversion bit number of the visual sense characteristics of the person described above are also plotted. As can be found from Fig. 16, the linear conversion bit number of the first floating point data is located above the curve of the γ-converted video signals. Accordingly, it can be found that the first floating point data can transfer the γ-converted video signals having the 10-bit data width without deteriorating the signals. As shown in Fig. 16, it can be found that the first floating point data has resolution higher than that of the visual sense characteristics of the person. Further, it can be found that, in the low luminance region, the first floating point data has the same gradation performance as that of the fixed point data having the 16-bit data width.

In summary, when the exponent has a value other than zero, the gradation performance of the first floating point data is more deteriorated than that of the fixed point data. However, since the part in which the deterioration occurs is a part "A" of Fig. 16, the part "A" exceeds the linear conversion bit numbers of the γ-converted video signals and the visual sense characteristics of the person. Accordingly, the deterioration of the gradation performance caused by the first floating point data cannot be recognized by a person. That is, no problem is caused by the deterioration.

As described above, the first floating point data can obtain gradation characteristics equivalent to those of the fixed point data having the 16-bit data width by the 12-bit data width. Accordingly, since a data bus width and a data width in a signal processing can be reduced without deteriorating image quality, hardware can be reduced. As a result, an image signal processing apparatus can be constructed at a low cost. Further, since the radix of an exponent is 4 (2 raised to the second power), the first floating point data can be converted to fixed point data by shifting only 2 bits. This also contributes to reduction of hardware. Note that the first floating point data can handle the γ-converted (γ = 0.45) video signals having the 10-bit data width.

(Second Floating Point Expression Method of Present Invention) Next, a second floating point expression method of the present invention will be explained. In the second floating point expression method, image data is expressed by a 10-bit data width. Hereinafter, the data structure in the second floating point expression method is called "second floating point data".

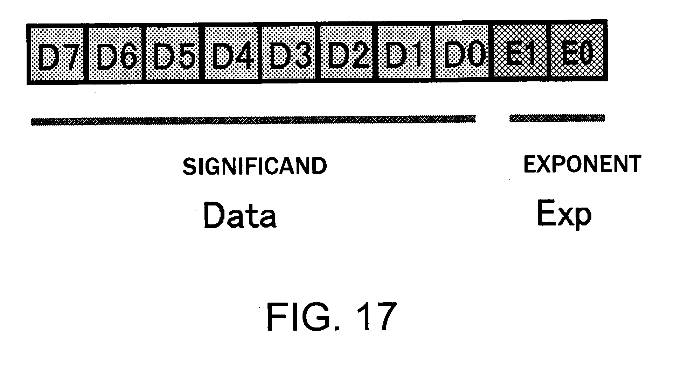

Fig. 17 shows a structure of second floating point data. The second floating point data has the 10-bit data width composed of a 8-bit significand (Data) and a 2-bit exponent (Exp). The data has no sign bit. Likewise the first floating point data, the radix of the exponent is "4".

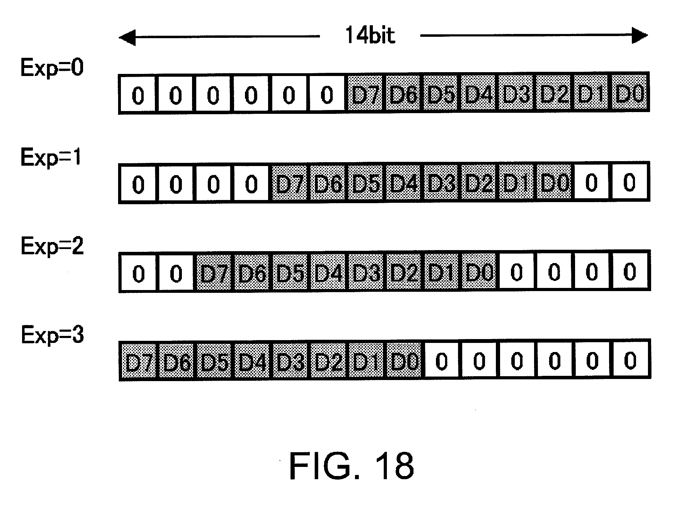

Fig. 18 schematically shows the numerical values that can be expressed by the respective values (0 to 3) of the exponent. As can be found from Fig. 18, the second floating point data can handle the values in substantially the same range as those of fixed point data of having a 14-bit data width by a 10-bit data width.

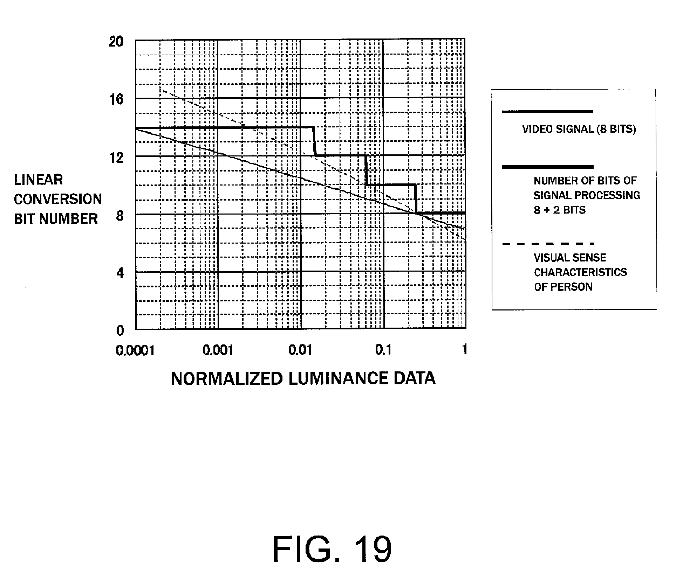

Fig. 19 shows the luminance vs. linear conversion bit number of the second floating point data. In Fig. 19, the linear conversion bit number of a γ-converted (γ = 0.45) video signals having a 8-bit data width and the linear conversion bit number of the visual sense characteristics of the person described above are also plotted. As can be found from Fig. 19, the linear conversion bit number of the second floating point data is located above the curve of the γ-converted video signals. Accordingly, it can be found that the second floating point data can transfer the γ-converted video signals having the 8-bit data width without deteriorating the signals. Further, as shown in Fig. 19, it can be also found that the second floating point data has resolution approximately higher than that of the visual sense characteristics of the person.

The second floating point data can obtain gradation characteristics equivalent to those of the fixed point data having the 14-bit data width by the 10-bit data width. Accordingly, since a data bus width and a data width of a signal processing can be reduced without deteriorating image quality, hardware can be reduced. As a result, an image signal processing apparatus can be constructed at a low cost. Further, since the radix of an exponent is 4 (2 raised to the second power), the second floating point data can be converted to fixed point data by shifting only 2 bits. This also contributes to reduction of hardware. Note that the second floating point data can handle the γ-converted (γ = 0.45) video signals having the 8-bit data width.

(Comparative Examples) Next, a floating point expression method other than those of the present invention will be explained for comparison.

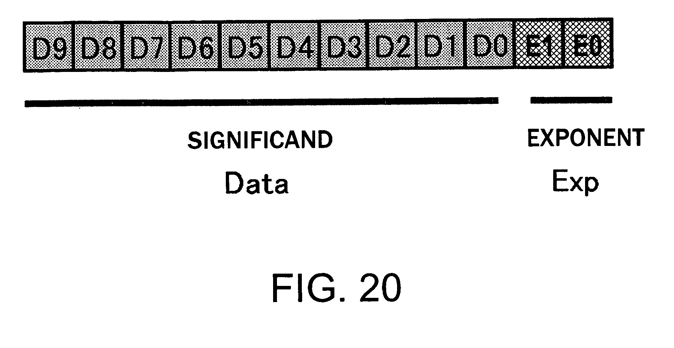

Fig. 20 shows a structure of floating point data of a comparative example 1. The floating point data of the comparative example 1 has a 12-bit data width and a 10-bit significand and a 2-bit exponent likewise the first floating point data. However, the radix of the exponent is "2".

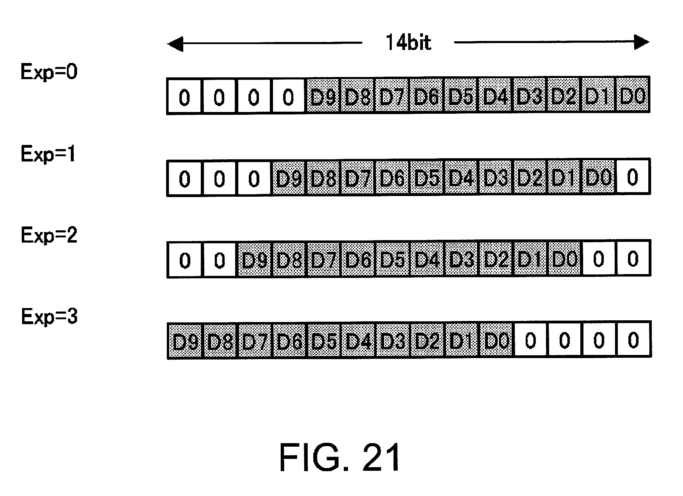

Fig. 21 schematically shows the numerical values that can be expressed by the floating point data of the comparative example 1. As can be found from Fig. 21, the floating point data of the comparative example 1 has only a range equivalent to that of fixed point data having a 14-bit data width. Accordingly, since the floating point data of the comparative example 1 has a maximum linear conversion bit number as small as 14 bits, the gradation performance thereof is inferior to that of the first floating point data having the same data width (12 bits).

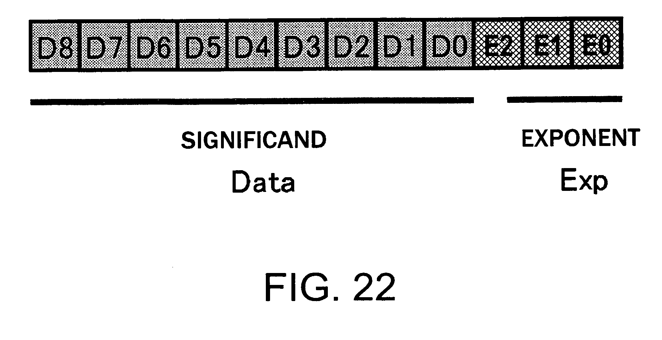

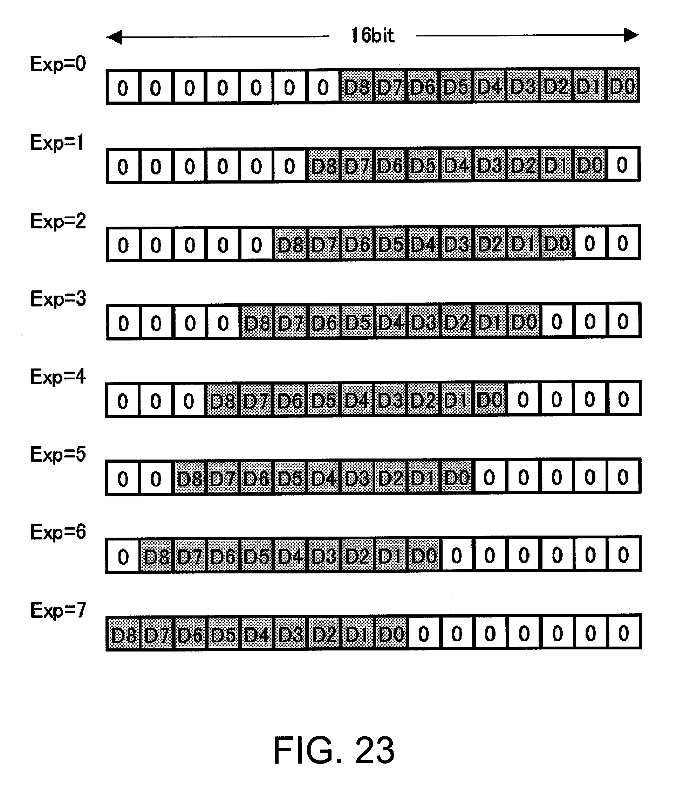

Fig. 22 shows a structure of floating point data of a comparative example 2. The floating point data of the comparative example 2 has a data width of 12 bits. To provide the floating point data with a 16-bit range likewise the first floating point data, 3 bits are allocated to an exponent, and 9 bits are allocated to a significand. The radix of the exponent is "2". Fig. 23 schematically shows the numerical values that can be expressed by the floating point data of the comparative example 2. The floating point data of the comparative example 2 can handle the values of substantially the same range as those of the fixed point data having a 16-bit data width.

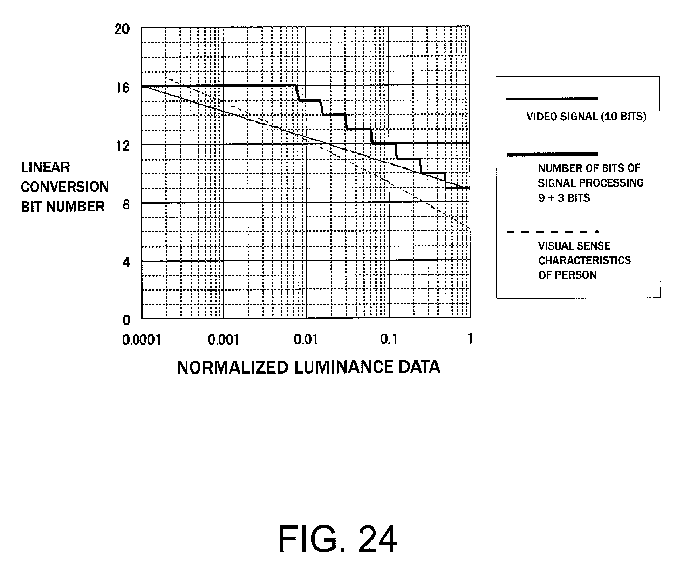

Fig. 24 is a graph of luminance vs. linearly converted bit number of the floating point data of the comparative example 2. In Fig. 24, the linear conversion bit number of γ-converted (γ = 0.45) video signals having a 10-bit data width and the linear conversion bit number of the visual sense characteristics of the person described above are also plotted for reference. As can be found from Fig. 24, the gradation performance of the floating point data of the comparative example 2 is inferior to that of the first floating point data (Fig. 16) and partly located below the characteristic curve of the γ-converted video signals having the 10-bit data width. Accordingly, when the γ-converted video signals having the 10-bit data width is processed, there is a possibility that quality deterioration which can be detected by a person occurs.

That is, although the floating point data of the comparative example 2 has the same range as that of the fixed point data having the 16-bit data width, the gradation characteristics of the floating point data is inferior to those of the first floating point data in a high luminance region.

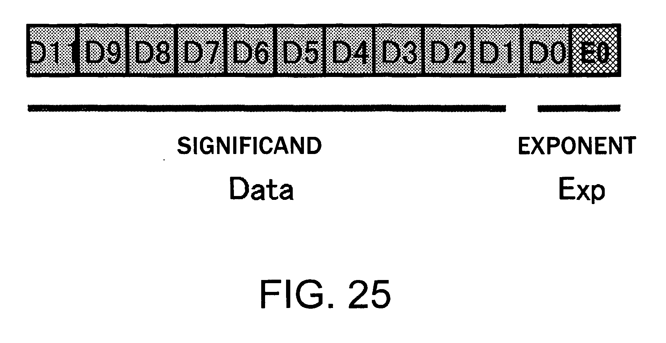

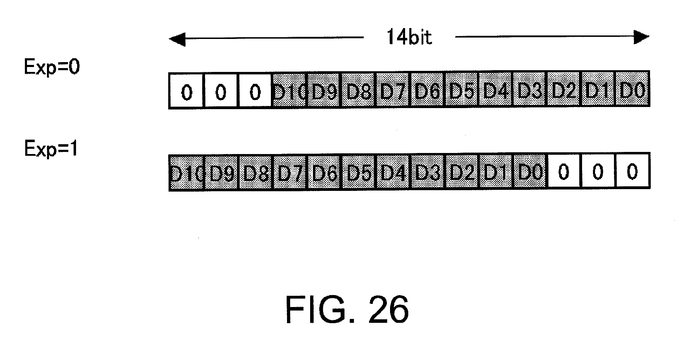

Fig. 25 shows a structure of floating point data of a comparative example 3. The floating point data of the comparative example 3 has a 12-bit data width composed of an 11-bit significand and a 1-bit exponent. The radix of the exponent (Exp) is set to "8". Fig. 26 schematically shows the numerical values that can be expressed by the floating point data of the comparative example 3. The floating point data of the comparative example 3 can handle the values of substantially the same range as those of the fixed point data having the 14-bit data width.

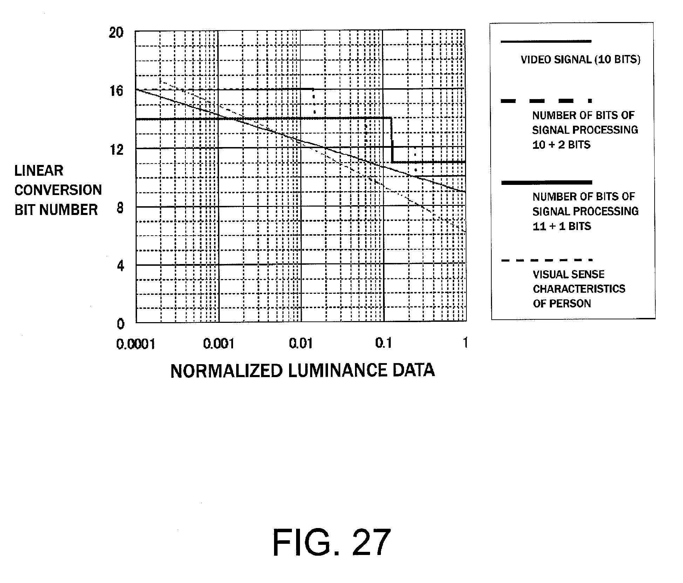

Fig. 27 is a graph of the luminance vs. linearly converted bit number (signal processing 11 + 1 bit) of the floating point data of the comparative example 3. In Fig. 27, the linear conversion bit number (video signals (10 bits)) of the γ-converted (γ = 0.45) video signals having the 10-bit data width and the linear conversion bit number in the visual sense characteristics of the person (visual sense characteristics of a person) are also plotted for reference. Further, in Fig. 27, the graph of the first floating point data (signal processing 10 + 2 bits) is also plotted for comparison.

As apparent from Fig. 27, it can be found that since the linear conversion bit number of the floating point data of the comparative example 3 is 14 bits in a low luminance region, the gradation performance thereof is inferior to that of the first floating point data. In contrast, in the high luminance region, the gradation performance of the comparative example 3 is superior to that of the first floating point data. However, since the linear conversion bit number of the first floating point data exceeds video signals and the visual sense characteristics of a person, both the floating point data of the comparative example 3 and the first floating point data have no difference when they are applied to an image signal processing. It can be found that when the linear conversion bit number in the low luminance region is taken into consideration, the gradation performance of the first floating point data is superior to that of the floating point data of the comparative example 3.

(Third Floating Point Expression Method of Present Invention)

Likewise, the following method can be used as third floating point data.

The third floating point data is an example for obtaining gradation characteristics equivalent to those of fixed point data having an 18-bit data width by a 14-bit data width. The not shown third floating point data has a significand having a 12-bit width as well as an exponent having a 2-bit width similar to that of the first and second floating point data (the radix of an exponent is 4). Gradation characteristics equivalent to those of a fixed point having an 18-bit width can be obtained by the third floating point data.

Accordingly, since a data bus width and a data width in a signal processing can be reduced without deteriorating image quality, hardware can be reduced, by using the third floating point data. As a result, an image signal processing apparatus can be constructed at a low cost. Further, since the radix of an exponent is 4 (2 raised to the second power), the third floating point data can be converted to fixed point data by shifting only 2 bits. This also contributes to reduction of hardware. Note that the third floating point data can handle γ-converted (γ = 0.45) video signals having a 12-bit data width.

<First Embodiment>

(Arrangement of Image Display)

An arrangement of an image display of a first embodiment will be explained.

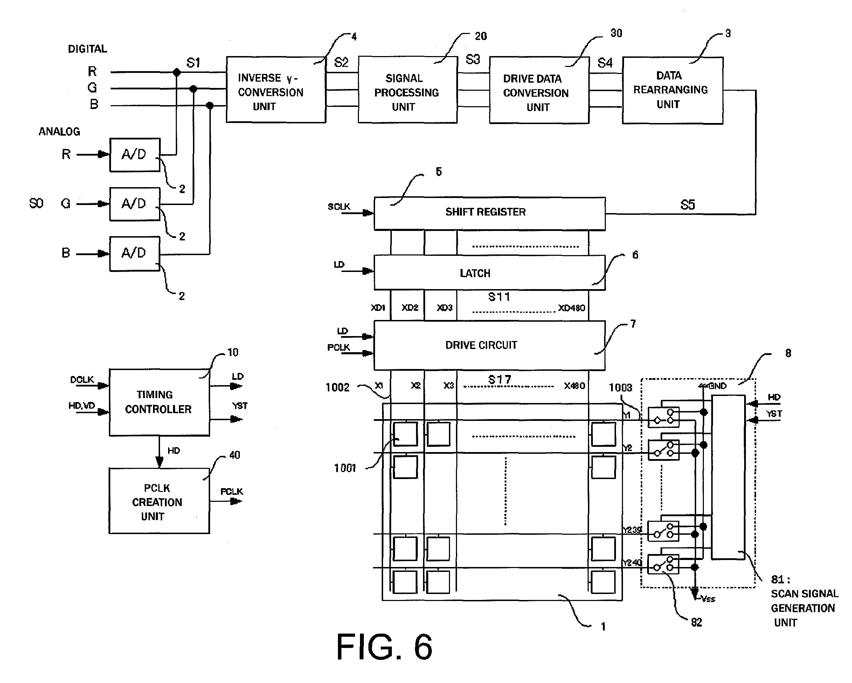

Fig. 6 is a block diagram showing an overall arrangement of the image display. Although a mode in which the present invention is applied to an image signal processing circuit built in the image display is exemplified here, the embodiment of the present invention is not limited thereto. For example, the present invention can be applied to an image signal processing circuit of equipment (image output device, for example, VTR, digital camera, set top box) connected to the image display.

The image display of Fig. 6 has a display panel (matrix panel) 1. The display panel 1 has such an arrangement that a multi-electron source, in which a lot of electron sources (for example, cold-cathode devices 1001) are disposed, and an image display member (for example, phosphor), which emits light by being radiated with electrons, are disposed in a thin vacuum vessel in confrontation with each other. The cold-cathode devices 1001 are disposed in the vicinities of the intersections of column wirings 1002 and row wirings 1003 and connected to both the wirings. In the embodiment, surface conduction electron-emitting devices are used as the cold-cathode devices. Since an arrangement and a manufacturing method of the surface conduction electron-emitting device is explained in detail in JP-A No. H10-39825 (1998-39825) filed by the applicant, the explanation thereof is omitted.

A drive voltage of the surface conduction electron-emittingdeviceshasathreshold voltage. When the drive voltage is lower than the threshold voltage, no emission current Ie flows. On the contrary, when the drive voltage is equal to or higher than the threshold voltage, the emission current Ie flow according to the drive voltage. A simple matrix drive was executed making use of the characteristics.

The embodiment exemplifies the display panel 1 having 480 elements × 240 elements. However, since the number of the elements is not limited to the above number because it is determined according to a way of use of a product. The display panel 1 has pixels disposed to in, for example, an RGB-stripe structure.

Reference numeral 2 denotes analog to digital converters (A/D converters). The A/D converters 2 convert an analog RGB component, which is signal S0, which is decoded from, for example, an NTSC signal to an RGB signal, to digital RGB signals S1 having 10-bit widths to respective colors. Hereinafter, the digital RGB signal S1 is also simply called video signals S1. As described above, the video signals S1 are signals previously subjected to γ-conversion (γ = 0.45).

Reference numeral 4 denotes an inverse γ-conversion unit. The inverse γ-conversion unit 4 subjects the video signals S1 to inverse γ-conversion (γ = 2.2) to cancel the γ-conversion and converts the video signals S1 to data having a value proportional to luminance.

Hereinafter, the data proportional to the luminance is called luminance data S2. Reference numeral 20 denotes a signal processing unit. The signal processing unit 20 is a circuit for subjecting the luminance data S2 to signal processings, for example, color correction, voltage drop correction, and the like. The signal processings will be described later in detail. Reference numeral 30 denotes a drive data conversion unit. The drive data conversion unit 30 converts luminance data S3 processed by the signal processing unit 20 to drive data S4. Reference numeral 3 denotes a data rearranging unit. The data rearranging unit 3 has a function for rearranging the drive data S4 of the respective colors according to the pixels disposed to the display panel 1 and outputs the drive data S4.

Reference numeral 5 denotes a shift register. The shift register 5 sequentially shifts and transfers an output S5 from the data rearranging unit 3 at a shift clock SCLK and outputs the drive data corresponding to the respective elements of the display panel 1 in parallel. Reference numeral 6 denotes a latch circuit. The latch circuit 6 latches the drive data from the shift register 5 in parallel in response to a load signal LD synchronized with a horizontal synchronization signal and holds the drive data until a next load signal LD is input. Reference numeral 7 denotes a drive circuit (modulation circuit). The drive circuit 7 creates a modulation signal according to the drive data input thereto and applies the modulation signal to the respective column wirings 1002. The drive circuit 7 of the present embodiment creates pulse width modulation by counting PCLK signals. Note that pulse amplitude modulation and modulation of both a pulse width and pulse amplitude may be used in place of the pulse width modulation.

Reference numeral 8 denotes a scan driver (scan circuit). The scan driver 8 is connected to the row wirings 1003 of the display panel 1. A scan signal generation unit 81 sequentially shifts YST signals, which are synchronized with the vertical synchronization signal of input video signals, in response to a signal HD determined by a timing controller 10. The scan signal generation unit 81 outputs selection/non-selection signals in parallel in correspondence to the number of the row wirings. Reference numeral 82 denotes a switch composed of a MOS transistor and the like. A selection electric potential (-Vss) and a non-selection electric potential (GND) are output by switching the switch 82 depending on the output level of the selection/non-selection signals of the scan signal generation unit 81.

The timing controller 10 creates control signals to respective function blocks at a desired timing from the synchronization signal of an input image, a data sampling clock DCLK, and the like. Reference numeral 40 denotes a PCLK creation unit for creating the PCLK signals.

(Operation of Image Display)

Next, an operation of the image display will be explained referring to Fig. 6.

The A/D converters 2 convert the analog RGB component signal S0 to the video signals S1 having the 10-bit data widths of the respective RGB. The inverse γ-conversion unit 4 receives the video signals S1 having the 1O-bit data widths which are digital RGB signals of the A/D converters 2 or a computer, and the like. At the time, it is preferable to determine the number of data of one scan line (1H) by the number of pixels on the column wiring side of the display panel 1. The video signals S1 are output in synchronism with a data sampling clock DCLK. The inverse γ-conversion unit 4 converts the video signals S1 to the luminance data S2, which has a value proportional to luminance and a 16-bit data width, by a not shown conversion table (ROM and RAM). The luminance to which reference is made here means the luminance determined by the input video signals S1. A TV signal is subjected to the γ-conversion (γ = 0.45) for correcting the characteristics of CRT. The inverse γ-conversion unit 4 subjects the video signals S1 to the inverse γ-conversion (γ = 2.2) and creates the data (luminance data S2) proportional to luminance.

The luminance data S2, which has the 16-bit data width and is output from the inverse γ-conversion unit 4, is input to the signal processing unit 20. The signal processing unit 20 subjects the luminance data S2 to necessary image signal processings to obtain the drive data matched to the characteristics of the display panel 1 and the drive circuit 7. The image signal processings include, for example, color correction, irregular luminance correction, voltage drop correction, and the like. Note that a reason why the data proportional to luminance is created by the inverse γ-conversion is to improve the accuracy of the signal processings such as the color correction and the like.

The luminance data S3 as the output from the signal processing unit 20 is used as an input to the drive data conversion unit 30. The drive data conversion unit 30 converts the luminance data S3 having a 16-bit data width and input thereto to the drive data S4 so that the display luminance characteristics of the display panel are made linear to the luminance data S3. Specifically, a table can be realized by a memory.

The drive data S4, which is output from the drive data conversion unit 30 is input to the data rearranging unit 3. The data rearranging unit 3 rearranges the drive data S4 of the respective colors according to the disposition of the pixels of the display panel 1. In the present invention, it is assumed that all or a part of the components from the inverse γ-conversion unit 4 to the drive data conversion unit 30 is called an image signal processing circuit.

(Image Signal Processing Circuit)

In an arrangement of Fig. 6, the luminance data S2 is fixed point data having the 16-bit data width. Floating point data is obtained by subjecting the luminance data S2 to floating point conversion. First floating point data has gradation characteristics equivalent to those of the fixed point data having the 16-bit data width by a 12-bit data width. As a result, the data width can be reduced from the 16 bits to the 12 bits without deteriorating image quality. An image signal processing circuit for realizing reduction of the data width will be explained.

(Arrangement Example 1)

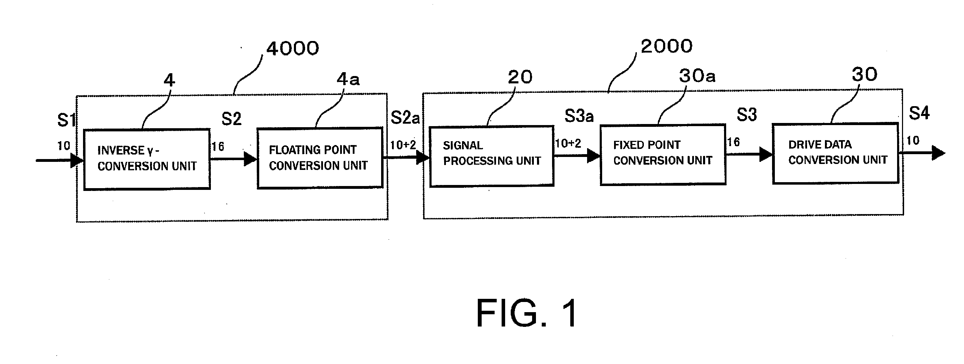

Fig. 1 shows an arrangement example 1 of the image signal processing circuit. In Fig. 1, reference numerals 4, 20, and 30 denote the inverse γ-conversion unit, the signal processing unit, and the drive data conversion unit described above. Reference numeral 4a denotes a floating point conversion unit, and reference numeral 30a denotes a fixed point conversion unit. Each of the suffixes (10, 16, 10 + 2) shown by the arrows of the respective blocks shows the data width (of each color) of each output signal. 10 + 2 shows the 10-bit data width of a significand and the 2-bit data width of an exponent.

The inverse γ-conversion unit 4 converts the integer data type video signals (S1) having the 10-bit data width to the fixed point data having the 16-bit data width (S2). The floating point conversion unit 4a converts the fixed point data having the 16-bit data width (S2) to first floating point data having a 12-bit data width (S2a). The signal processing unit 20 subjects the first floating point data (S2a) to predetermined signal processings. The fixed point conversion unit 30a converts first floating point data (S3a), which has a 12-bit data width and is output from the signal processing unit 20, to the fixed point data having the 16-bit data width (S3). The drive data conversion unit 30 creates the integer data type drive data having a 10-bit data width (S4) from the fixed point data having the 16-bit data width (S3).

Reference numerals 4000, 2000 denote squares showing that circuits are mounted on ASIC and FPGA, and each of the circuits in the squares is formed of the same semiconductor chip.

As described above, since the data width can be reduced from 16 bits to 12 bits without deteriorating image quality by employing the first floating point, a hardware cost can be reduced. Further, since the circuits are mounted on ASIC and FPGA as shown in Fig. 1, the number of drawing-out pads (input/output terminals) from the packages of ASIC and FPGA can be reduced. In ASIC and FPGA, although the die size of a semiconductor affects a cost, the drawing-pads are also a large cost increasing factor. The arrangement example 1 of the present invention has an advantage in that the cost of ASIC and FPGA can be reduced by reducing the number of the drawing-pads.

The fixed point conversion unit 4a may be composed of a bit shift circuit for switching a shift amount based on the information of the upper bits of the input luminance data (S2) or composed of a conversion table (memory). The floating point conversion unit 30a may be composed of a bit shift circuit for switching a shift amount based on the information of the exponents of the floating point data or composed of a conversion table (memory).

(Arrangement Example 2)

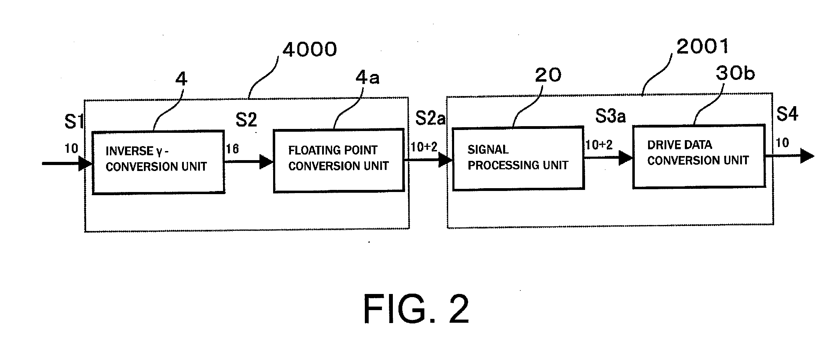

Fig. 2 shows an arrangement example 2 of the image signal processing circuit. The arrangement example 2 is composed of a table in which a drive data conversion unit 30b uses the floating point data (S3a), which is subjected to predetermined processings by a signal processing unit 20, as an input and the output drive data (S4) as an output. That is, the functions of the fixed point conversion unit 30a and the drive data conversion unit 30 of Fig. 1 are realized by one memory. Moreover, since a drive data conversion unit has an input data width reduced from 16 bits to 12 bits, the memory size of the drive data conversion unit can be reduced. With this arrangement, a hardware cost can be further reduced by simplifying a circuit arrangement.

Reference numerals 4000, 2001 denote squares showing that circuits are mounted on ASIC and FPGA, and each of the circuits in the squares is formed of the same semiconductor chip. The number of drawing-out pads (input/output terminals) from the packages of ASIC and FPGA can be reduced by mounting the circuits on ASIC and FPGA as shown in Fig. 2. In ASIC and FPGA, although the die size of a semiconductor affects a cost, the drawing-pads are also a large cost increasing factor. The arrangement example 2 of the present invention has an advantage in that the cost of ASIC and FPGA can be reduced by reducing the number of the drawing-pads.

(Arrangement Example 3)

Fig. 3 shows an image signal processing circuit as a different arrangement example (arrangement example 3) of the above image signal processing circuits. In the arrangement example 3, an inverse γ-conversion unit 4b is composed of a table which uses the input image signals (S1) as an input and the floating point data (S2a) as an output. That is, the functions of the inverse γ-conversion unit 4 and the floating point conversion unit 4a of Fig. 1 are realized by one memory. Further, since the inverse γ-conversion unit has an output data width reduced from 16 bits to 12 bits, the memory size of the inverse γ-conversion unit can be reduced. With this arrangement, since a circuit arrangement is further simplified, a hardware cost can be further reduced. It is needless to say that the drive data conversion unit 30b of Fig. 3 may be replaced with the fixed point conversion unit 30a and the drive data conversion unit 30 of Fig. 1.

Reference numerals 4001, 2001 denote squares showing that circuits are mounted on ASIC and FPGA, and each of the circuits in the squares is formed of the same semiconductor chip. The number of drawing-out pads (input/output terminals) from the packages of ASIC and FPGA can be reduced by mounting the circuits on ASIC and FPGA as shown in Fig. 3. In ASIC and FPGA, although the die size of a semiconductor affects a cost, the drawing-pads are also a large cost increasing factor. The arrangement example 3 of the present invention has an advantage in that the cost of ASIC and FPGA can be reduced by reducing the number of the drawing-pads.

(Arrangement Example 4)

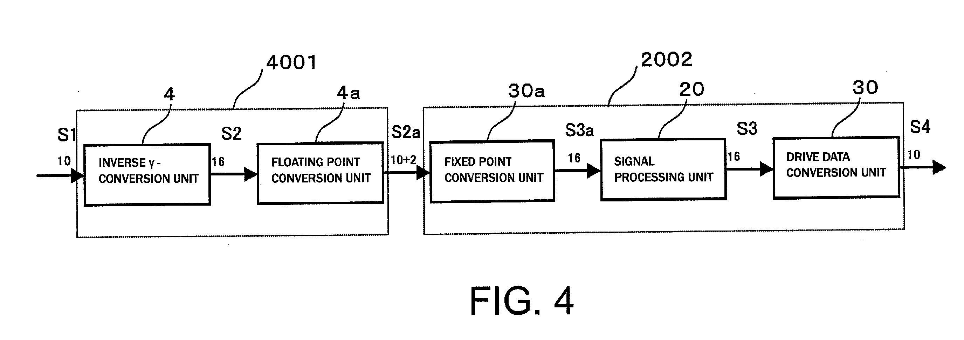

Fig. 4 shows a different arrangement example (arrangement example 4) of the above image signal processing circuits. In Fig. 4, reference numerals 4, 20, and 30 denote the inverse γ-conversion unit, the signal processing unit, and the drive data conversion unit described above, respectively. Reference numeral 4a denotes a floating point conversion unit, and reference numeral 30a denotes a fixed point conversion unit. Each of the suffixes (10, 16, 10 + 2) shown by the arrows of the respective blocks shows the data width (of each color) of each output signal. 10 + 2 shows the 10-bit data width of a significand and the 2-bit data width of an exponent.

The inverse γ-conversion unit 4 converts the integer data type video signals (S1) having the 10-bit data width to the fixed point data having the 16-bit data width (S2). The floating point conversion unit 4a converts the fixed point data having the 16-bit data width (S2) to the floating point data having the 12-bit data width (S2a). The fixed point conversion unit 30a converts the floating point data (S2a) to the fixed point data having the 16-bit data width (S3a). The signal processing unit 20 subjects the fixed point data (S3a) to predetermined signal processings. The drive data conversion unit 30 creates the integer data type drive data having the 10-bit data width (S4) from the fixed point data having the 16-bit data width (S3).

Reference numerals 4001 and 2002 denote squares showing that circuits are mounted on ASIC and FPGA, and each of the circuits in the squares is formed of the same semiconductor chip.

The arrangement has no advantage of simply reducing the number of circuits as compared with a conventional arrangement because the arrangement additionally requires the floating point conversion unit 4a and the fixed point conversion unit 30a. However, since the circuits are mounted on ASIC and FPGA as shown in Fig. 4, the number of drawing-out pads (input/output terminals) from the packages of ASIC and FPGA can be reduced. In ASIC and FPGA, although the die size of a semiconductor affects a cost, the drawing-pads are also a large cost increasing factor. The arrangement example 4 of the present invention has an advantage in that the cost of ASIC and FPGA can be reduced by reducing the number of the drawing-pads.

(Arrangement Example 5)

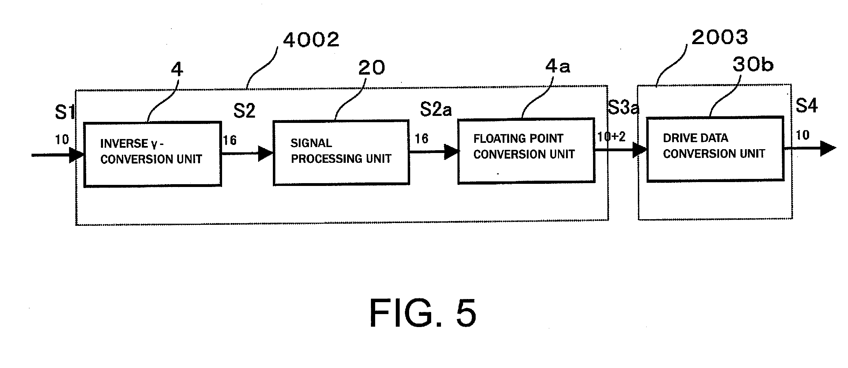

Fig. 5 shows an image signal processing circuit as a different arrangement example (arrangement example 5) of the above image signal processing circuits. In Fig. 5, reference numerals 4, 20 and 30b denote the inverse γ-conversion unit, the signal processing unit, and the drive data conversion unit described above, respectively. Reference numeral 4a denotes a floating point conversion unit. Each of the suffixes (10, 16, 10 + 2) shown by the arrows of the respective blocks shows the data width (of each color) of each output signal. 10 + 2 shows the 10-bit data width of a significand and the 2-bit data width of an exponent.

The inverse γ-conversion unit 4 converts the integer data type video signals having the 10-bit data width (S1) to the fixed point data having the 16-bit data width (S2). The signal processing unit 20 subjects the fixed point data (S2) to predetermined signal processings. The drive data conversion unit 30b is composed of a table which uses the floating point data (S3a), which is subjected to predetermined processings by the signal processing unit 20, as an input and the drive data (S4) as an output. That is, the functions of the fixed point conversion unit 30a and the drive data conversion unit 30 of the arrangement example 1 (Fig. 1) are realized by one memory. Moreover, since the drive data conversion unit has an input data width reduced from 16 bits to 12 bits, the memory size of the drive data conversion unit can be reduced. With this arrangement, a hardware cost can be further reduced by simplifying a circuit arrangement.

That is, since the data subjected to the inverse γ-conversion is converted to the floating point data, and further since the memory size of a table can be reduced when reference table processing is performed, a cost can be reduced. Reference numerals 4002 and 2003 denote squares showing that circuits are mounted on ASIC and FPGA, and each of the circuits in the squares is formed of the same semiconductor chip.

The number of drawing-out pads (input/output terminals) from the packages of ASIC and FPGA can be reduced by mounting the circuits on ASIC and FPGA as shown in Fig. 5. In ASIC and FPGA, although the die size of a semiconductor affects a cost, the drawing-pads are also a large cost increasing factor. The arrangement example 5 of the present invention has an advantage in that the cost of ASIC and FPGA can be reduced by reducing the number of the drawing-pads.

As described above, the image signal processing circuit of the first embodiment of the present invention handles an image signal to be subjected to signal processing by the first floating point data, the data width can be reduced to 12 bits while maintaining the gradation performance equivalent to that of 16 bits. In particular, when a function, which processes luminance data by the floating point, is realized by hardware (FPGA, ASIC, and the like), the number of the hardware can be reduced, which results in cost reduction.

<Second Embodiment>

Next, a second embodiment will be explained. In the second embodiment of the present invention, the second floating point data described above is applied to the image signal processing circuit of the image display of Fig. 6. Since the other arrangement portion of the second embodiment is the same as that of the first embodiment, the explanation thereof is omitted.

The second floating point data can be applied to video signals (for example, 8-bit video signals) which have an 8-bit data width and subj ected to the γ-conversion (γ = 0.45). As a result, a data width can be suppressed to 1O bits while maintaining a gradation performance equivalent to 14 bits.

<Third Embodiment>

Next, a third embodiment will be explained. In the third embodiment of the present invention, the third floating point data described above is applied to the image signal processing circuit of the image display of Fig. 6. Since the other arrangement portion of the second embodiment is the same as that of the first embodiment, the explanation thereof is omitted.

The third floating point data can be applied to signal processing of video signals (for example, 12-bit video signals) which have a 12-bit width and subjected to the γ-conversion (γ = 0.45). As a result, a data width can be suppressed to 14 bits while maintaining a gradation performance equivalent to 18 bits.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. An image signal processing apparatus has an inverse γ-conversion unit (4) for receiving γ-converted video signals and subjecting the video signals to processing for canceling γ-conversion characteristics, and a conversion unit (4a) for generating floating point data from fixed point type data which is proportional to luminance as an output from the inverse γ-conversion unit to transfer the floating point data or to subject the floating point data to reference table processing or signal processing, wherein the floating point data has a significand and an exponent, and the radix of the exponent is 4.

**Claims**

1. An image signal processing apparatus to transfer a floating point data or subject a floating point data to reference table processing or signal processing, comprising:

   an inverse γ-conversion unit to receive γ-converted video signals and subject the video signals to processing for canceling γ-conversion characteristics; and
   a conversion unit to generate a floating point data from a fixed point data which is proportional to luminance as an output from the inverse γ-conversion unit, wherein
   the floating point data has a significand and an exponent, and a radix of the exponent is 4.

2. An image signal processing apparatus according to claim 1, further comprising

   a conversion unit to convert the floating point data, which is transferred or subjected to the reference table processing or the signal processing, to drive data adapted to a drive circuit.

**3.** An image signal processing apparatus according to claim 1 or 2, wherein

the conversion unit to generate the floating point data is a table which uses the fixed point data as an input and the floating point data as an output.

**4.** An image signal processing apparatus according to claim 2, wherein

the conversion unit to convert the floating point data to the drive data adapted to the drive circuit is a table which uses the floating point data, which is transferred or subjected to the reference table processing or the signal processing, as an input and the drive data as an output.

**5.** An image signal processing apparatus according to one of claims 1 to 4, wherein

the inverse $\gamma$-conversion unit and the conversion unit to generate the floating point data consist of one table.

**6.** An image signal processing method to transfer a floating point data or subject a floating point data to reference table processing or signal processing, comprising:

an inverse $\gamma$-conversion step of receiving $\gamma$-converted video signals and subjecting the video signals to processing for canceling $\gamma$-conversion characteristics; and
a step of generating a floating point data from a fixed point data which is proportional to luminance as an output from the inverse $\gamma$-conversion step, wherein
the floating point data has a significand and an exponent, and a radix of the exponent is 4.

FIG. 1

EP 2 088 765 A2

FIG. 2

FIG. 3

4001

4            4a

2002

30a            20            30

S1

S2            S2a            S3a            S3            S4

10 →        | INVERSE γ -<br>CONVERSION UNIT | 16 →        | FLOATING POINT<br>CONVERSION UNIT | 10+2 →        | FIXED POINT<br>CONVERSION UNIT | 16 →        | SIGNAL<br>PROCESSING UNIT | 16 →        | DRIVE DATA<br>CONVERSION UNIT | 10 →

FIG. 4

FIG. 5

FIG. 6

EP 2 088 765 A2

FIG. 7

LINEAR CONVERSION
BIT NUMBER

FIG. 8

FIG. 9

LINEAR CONVERSION
BIT NUMBER

FIG. 10

FIG. 11

FIG. 12

FIG. 13

| D9 | D8 | D7 | D6 | D5 | D4 | D3 | D2 | D1 | D0 | E1 | E0 |

SIGNIFICAND

Data

EXPONENT

Exp

FIG. 14

FIG. 15

LINEAR
CONVERSION
BIT NUMBER

NORMALIZED LUMINANCE DATA

VIDEO SIGNAL (10 BITS)

NUMBER OF BITS OF
SIGNAL PROCESSING
10 + 2 BITS

VISUAL SENSE
CHARACTERISTICS
OF PERSON

FIG. 16

| D7 | D6 | D5 | D4 | D3 | D2 | D1 | D0 | E1 | E0 |

SIGNIFICAND      EXPONENT

Data      Exp

FIG. 17

FIG. 18

FIG. 19

| D9 | D8 | D7 | D6 | D5 | D4 | D3 | D2 | D1 | D0 | E1 | E0 |
|----|----|----|----|----|----|----|----|----|----|----|----|

SIGNIFICAND        EXPONENT

Data          Exp

# FIG. 20

← ——————— 14bit ——————— →

Exp=0

| 0 | 0 | 0 | 0 | D9 | D8 | D7 | D6 | D5 | D4 | D3 | D2 | D1 | D0 |

Exp=1

| 0 | 0 | 0 | D9 | D8 | D7 | D6 | D5 | D4 | D3 | D2 | D1 | D0 | 0 |

Exp=2

| 0 | 0 | D9 | D8 | D7 | D6 | D5 | D4 | D3 | D2 | D1 | D0 | 0 | 0 |

Exp=3

| D9 | D8 | D7 | D6 | D5 | D4 | D3 | D2 | D1 | D0 | 0 | 0 | 0 | 0 |

# FIG. 21

| D8 | D7 | D6 | D5 | D4 | D3 | D2 | D1 | D0 | E2 | E1 | E0 |

SIGNIFICAND

Data

EXPONENT

Exp

FIG. 22

FIG. 23

FIG. 24

| D11 | D9 | D8 | D7 | D6 | D5 | D4 | D3 | D2 | D1 | D0 | E0 |
|-----|----|----|----|----|----|----|----|----|----|----|----|

SIGNIFICAND                    EXPONENT

Data                           Exp

FIG. 25

Exp=0

# FIG. 26

FIG. 27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004347629 A
- JP 2008145494 A
- US 2008136846 A
- JP 2003114639 A
- US 2003011545 A1
- JP 2001085997 A
- JP H1039825 A
- JP 10039825 A